# EUROPEAN PATENT APPLICATION

(11) **EP 4 459 957 A1**
(43) Date of publication of application: **06.11.2024**
(21) Application number: 22914631.1
(22) Date of filing: 26.12.2022
(51) Int. Cl.: H04L 67/101

(54) **SERVER SELECTION METHOD AND DEVICE**

(30) Priority: 27.12.2021 CN 202111616682
(71) Applicant: VIVO MOBILE COMMUNICATION CO., LTD., Dongguan, Guangdong 523863 (CN)
(72) Inventor: LV, Huazhang, Dongguan, Guangdong 523863 (CN)
(74) Representative: Lavoix
(86) International application number: PCT/CN2022/141821
(87) International publication number: WO 2023/125377

(57) **Abstract**

Embodiments of this application disclose a server selection method and a device, and pertain to the field of communication technologies. The server selection method in the embodiments of this application includes: obtaining, by a first communication device, a DNS handling rule, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource; and transmitting, by the first communication device, the DNS handling rule to a second communication device.

## Description

### CROSS-REFERENCE TO RELATED APPLICATIONS

This application claims priority to Chinese Patent Application No. 202111616682.5, filed in China on December 27, 2021, which is incorporated herein by reference in its entirety.

### TECHNICAL FIELD

This application pertains to the field of communication technologies and specifically relates to a server selection method and a device.

### BACKGROUND

In related art, a core network device, such as an edge application server discovery function (Edge Application Server Discovery Function, EASDF), can transmit a domain name system (Domain Name System, DNS) query of a terminal to a DNS server, so that the DNS server can resolve an application server corresponding to the DNS query. However, the application server resolved by the DNS server may have poor performance, such as insufficient computing power and large N6 delay, thereby affecting the communication performance of the terminal.

### SUMMARY

Embodiments of this application provide a server selection method and a device, so as to solve the problem that the communication performance of a terminal is affected by the poor performance of an application server resolved by a DNS server.

According to a first aspect, a server selection method is provided, including: obtaining, by a first communication device, a DNS handling rule, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest user plane function UPF processing delay, and optimal EAS computing power resource; and transmitting, by the first communication device, the DNS handling rule to a second communication device.

According to a second aspect, a server selection method is provided, including: obtaining, by a second communication device, a DNS handling rule; and transmitting, by the second communication device, a DNS query of a terminal to a DNS server based on the DNS handling rule, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a third aspect, a server selection method is provided, including: generating, by a third communication device, a DNS handling rule; transmitting, by the third communication device, the DNS handling rule to a first communication device or a second communication device, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a fourth aspect, a server selection method is provided, including: transmitting, by a fourth communication device, first information to a third communication device, a first communication device, or a second communication device, where the first information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a fifth aspect, a server selection method is provided, including: transmitting, by a fifth communication device, third information to a third communication device, where the third information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a sixth aspect, a first communication device is provided, including: an obtaining module, configured to obtain a DNS handling rule, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest user plane function UPF processing delay, and optimal EAS computing power resource; and a transmitting module, configured to transmit the DNS handling rule to a second communication device.

According to a seventh aspect, a second communication device is provided, including: an obtaining module, configured to obtain a DNS handling rule; and a transmitting module, configured to transmit a DNS query of a terminal to a DNS server based on the DNS handling rule, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to an eighth aspect, a third communication device is provided, including: a generating module, configured to generate a DNS handling rule; and a transmitting module, configured to transmit the DNS handling rule to a first communication device or a second communication device, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a ninth aspect, a fourth communication device is provided, including: a transmitting module, configured to transmit first information to a third communication device, a first communication device, or a second communication device, where the first information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to a tenth aspect, a fifth communication device is provided, including: a transmitting module, configured to transmit third information to a third communication device, where the third information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

According to an eleventh aspect, a network-side device is provided, where the network-side device includes a processor and a memory. The memory stores a program or instructions capable of running on the processor. When the program or instructions are executed by the processor, the steps of the method according to any one of the first aspect to the fifth aspect are implemented.

According to a twelfth aspect, a network-side device is provided, including a processor and a communication interface, where the processor and the communication interface are used to implement the steps of the method according to any one of the first aspect to the fifth aspect.

According to a thirteenth aspect, a readable storage medium is provided, where the readable storage medium stores a program or instructions, and when the program or instructions are executed by a processor, the steps of the method according to any one of the first aspect to the fifth aspect are implemented.

According to a fourteen aspect, a chip is provided. The chip includes a processor and a communication interface, where the communication interface is coupled to the processor, and the processor is configured to run a program or instructions to implement the steps of the method according to any one of the first aspect to the fifth aspect.

According to a fifteen aspect, a computer program/program product is provided. The computer program/program product is stored in a storage medium, and the computer program/program product is executed by at least one processor to implement the steps of the method according to any one of the first aspect to the fifth aspect.

In the embodiments of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. The embodiments of this application are conducive to resolving an EAS with better performance, improving the communication performance of the terminal, and improving the user experience.

### BRIEF DESCRIPTION OF DRAWINGS

FIG. 1 is a schematic diagram of a wireless communication system according to an embodiment of this application;
FIG. 2 is a schematic flowchart of a server selection method according to an embodiment of this application;
FIG. 3 is a schematic flowchart of a server selection method according to an embodiment of this application;
FIG. 4 is a schematic flowchart of a server selection method according to an embodiment of this application;
FIG. 5 is a schematic flowchart of a server selection method according to an embodiment of this application;
FIG. 6 is a schematic flowchart of a server selection method according to an embodiment of this application;
FIG. 7 is a schematic flowchart of a server selection method according to an embodiment of this application;
FIG. 8 is a schematic flowchart of a server selection method according to an embodiment of this application;
FIG. 9 is a schematic flowchart of a server selection method according to an embodiment of this application;
FIG. 10 is a schematic structural diagram of a first communication device according to an embodiment of this application;
FIG. 11 is a schematic structural diagram of a second communication device according to an embodiment of this application;
FIG. 12 is a schematic structural diagram of a third communication device according to an embodiment of this application;
FIG. 13 is a schematic structural diagram of a fourth communication device according to an embodiment of this application;
FIG. 14 is a schematic structural diagram of a fifth communication device according to an embodiment of this application;
FIG. 15 is a schematic structural diagram of a communication device according to an embodiment of this application; and
FIG. 16 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6^{th} Generation, 6G) communication system.

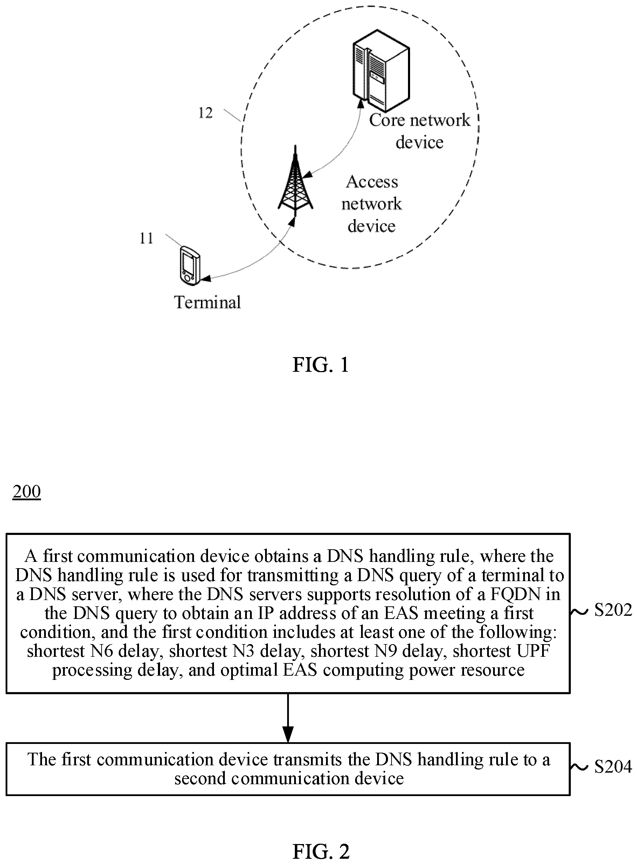

FIG. 1 is a block diagram of a wireless communication system to which the embodiments of this application are applicable. The wireless communication system includes a terminal 11 and a network-side device 12. The terminal 11 may be a terminalside device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example for description, although the specific type of the base station is not limited. The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and the specific type of the core network device is not limited.

The following describes in detail a server selection method provided in embodiments of this application through some embodiments and application scenarios thereof with reference to the accompanying drawings.

In the embodiments of this application, a first communication device may be a session management function (Session Management Function, SMF); a second communication device may be an edge application server discovery function (Edge Application Server Discovery Function, EASDF); a third communication device may be a network data analytics function (Network Data Analytics Function, NWDAF); a fourth communication device may be an application function (Application Function, AF); and a fifth communication device may be a user plane function (User Plane Function, UPF).

As shown in FIG. 2, an embodiment of this application provides a server selection method 200. The method may be executed by a first communication device. In other words, the method may be executed by software or hardware installed in the first communication device. The method includes the following steps.

S202: A first communication device obtains a domain name system (Domain Name System, DNS) handling rule, where the DNS handling rule is used for transmitting a DNS query of a terminal to a DNS server, where the DNS server supports resolution of a fully qualified domain name (Fully Qualified Domain Name, FQDN) in the DNS query to obtain an internet protocol (Internet Protocol, IP) address of an edge application server (Edge application server, EAS) meeting a first condition, and the first condition includes at least one of the following: shortest N6 delay, shortest N3 delay, shortest N9 delay, shortest UPF processing delay, and optimal EAS computing power resource.

In this embodiment, the first communication device may be an SMF.

In this step, the first communication device may generate a DNS handling rule (DNS handling rules); alternatively, the first communication device requests a third communication device to provide a DNS handling rule for the DNS query. In this step, the first communication device may receive the DNS handling rule transmitted by the third communication device, and the third communication device may be an NWDAF.

N6 is an interface between a UPF and a data network (Data Network, DN). The foregoing N6 delay may be a public network delay, specifically, a delay between a protocol data unit (Protocol Data Unit, PDU) session anchor (PDU Session Anchor, PSA) and an EAS or an application server (Application Server, AS). N6 delay may alternatively represent a delay between the UPF and the DN data network. N6 delay may alternatively be predicted by artificial intelligence (Artificial Intelligence, Al) based on historical statistics. For example, the NWDAF collects the historical records of N6 delay from a UPF to a DN, and then the NWDAF uses its own AI model to predict the delay of an N6 interface at the current time point; alternatively, the N6 delay may be obtained by requesting a third-party application server or UPF to provide priori information, for example, subscribing to the service of the UPF to obtain the N6 delay provided by the UPF.

The foregoing N3 delay is a delay between the user plane and the RAN. N3 is an interface between a UPF and an RAN. The N3 interface delay may be reported by the UPF; alternatively, the delay of one N3 interface at the current time point may be obtained through collection of historical records of the delay of the N3 interface by the NWDAF and then analysis of the records by the AI.

The foregoing N9 delay is a delay between two UPFs. Since data needs to be forwarded through multiple UPFs before transmitted to an EAS or a DN through a PSA, the N9 delay between UPFs is also one of parameters that affect the delay of accessing the EAS. Similarly, the N9 delay may alternatively be reported by a UPF or provided by an NWDAF.

To sum up, to ensure that the selected EAS provides an optimal experience, the end-to-end delay for accessing an EAS can be minimized, or the computing power of the EAS can be optimized to minimize the internal processing delay of the EAS. Therefore, to ensure that a server providing optimal EAS experience can be resolved by a DNS server for a DNS query of a terminal, the generated DNS handling rule must be guaranteed to be transmitted to the DNS server, and an EAS IP address resolved by this DNS server must have the shortest end-to-end delay or the optimal EAS computing power. As a result, when generating the DNS handling rule, the first communication device needs to consider the delays of various interfaces reported by the UPF, or consider the computing power state of the EAS. Alternatively, the NWDAF is used to assist in generating the handling rule, where the NWDAF generates the DNS handling rule based on the delays of various interfaces or the computing power state of the EAS.

S204: The first communication device transmits the DNS handling rule to a second communication device.

In this embodiment, the second communication device may be an EASDF, and the EASDF is used to process the DNS query of the terminal based on the DNS handling rule.

In the server selection method provided in this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

This embodiment of this application fully considers the computing power of the EAS, the N6, N3, and N9 interface delays, and the UPF processing delay. Based on the FQDN in the DNS query transmitted by the terminal, a DNS handling rule that can be used to select an optimal server is formulated such that the DNS query of the terminal is transmitted to a DNS server capable of resolving and obtaining an optimal EAS. The UPF processing delay refers to changes in speed at which data packets are processed due to changes in the computing power resource inside the UPF. For example, if the UPF computing power is insufficient, the speed of forwarding or processing data packets decreases. The UPF processing delay is also one of the factors affecting the end-to-end delay from the terminal to the service server.

Optionally, in an embodiment, the DNS handling rule includes at least one of the following (1) and (2):
(1) a first IP address, where the first IP address includes an IP address of a region in which the EAS meeting the first condition is located, and is used to be added to the DNS query so as to be transmitted to a first DNS server, where the first DNS server includes a central DNS server, and the first DNS server may be the DNS server mentioned in S202; and
(2) a second IP address, where the second IP address includes an IP address of a second DNS server, where the second DNS server supports resolution of the IP address of the EAS meeting the first condition; or the second DNS server is located at a same location as the terminal, where the second DNS server includes a local DNS server, and the second DNS server may be the DNS server mentioned in S202. Optionally, the second DNS server being located at a same location as the terminal includes: the second DNS server and the terminal being under a same data network access identity (Data Network Access Identity, DNAI).

In an implementation, an extension mechanism for DNS client subnet (Extension Mechanisms for DNS Client Subnet, ECS) option (option) (also known as edns-client-subnet) may be added in the DNS query. This field generally uses a specific IP address to indicate the current location of the terminal. Then, the DNS server can resolve an FQDN based on this field and report an IP address of a server that is closest to the topology of the terminal. In an embodiment, the first IP address may be added to the DNS query as the ECS option of the DNS query. Optionally, in an embodiment, the first IP address includes at least one of the following (1) to (3):
(1) an IP address or IP address segment of a data network (Data Network, DN) in which the EAS meeting the first condition is located;
(2) a data network access identity (Data Network Access Identity, DNAI) of the DN in which the EAS meeting the first condition is located; and
(3) an IP address or address segment of a PSA corresponding to a first DNAI, where the first DNAI includes the DNAI of the DN in which the EAS meeting the first condition is located.

The foregoing (1) to (3) indicate that the first IP address reflects the location of the EAS with the optimal computing power. Therefore, after the IP address is added to the ECS option field of the DNS query, the DNS server can resolve an IP address of an EAS with the optimal topology or optimal computing power under the address region based on the IP address.

Optionally, in an embodiment, the obtaining, by a first communication device, a DNS handling rule includes: requesting, by the first communication device, a third communication device to provide the DNS handling rule for the DNS query; or generating, by the first communication device, the DNS handling rule based on first information, where the first information includes at least one of the following: EAS computing power information, N6 delay information of each PSA, PSA and RAN N3 delay information, N9 delay information, and UPF processing delay information, where the EAS computing power information includes computing power resource information corresponding to an FQDN under a target region. The target region may be within a DN or DNAI.

Optionally, in an embodiment, the DNS query is a DNS query transmitted by the terminal.

Optionally, in an embodiment, the requesting, by the first communication device, a third communication device to provide the DNS handling rule for the DNS query includes: transmitting, by the first communication device, at least one of the following (1) to (5) to the third communication device: (1) an IP address of the terminal; (2) location information of the terminal; (3) the DNS query transmitted by the terminal or the FQDN in the DNS query; (4) EAS computing power information, where the EAS computing power information includes the computing power resource information corresponding to the FQDN under the target region; and (5) information on N6, N3, and N9 interface delays and the UPF processing delay.

Optionally, in an embodiment, the EAS computing power information includes at least one of the following: (1) computing power resource information of one or more EASs corresponding to a first FQDN under the target region; and (2) an EAS with a largest computing power resource corresponding to the first FQDN under the target region; where the first FQDN is an FQDN supported and resolvable by the first DNS server or the second DNS server. For example, under one region (for example, within the scope of DN 1), one FQDN www.abc.com corresponds to a plurality of servers. Then, we need to obtain EAS computing power information in the following two cases.

Case 1: The computing power resource information corresponding to the server IP addresses that can be resolved through the FQDN. For example, if the FQDN can correspond to IP addresses of 5 servers, although we do not know the IP addresses (requiring DNS server resolution), we can know the information on the computing power resources corresponding to these 5 servers, for example, the server cluster consists of 10 servers, or 1 million floating-point operations per second (floating-point operations per second, flops) can be completed every second.

Case 2: The largest computing power resource corresponding to the server IP addresses that can be resolved through the FQDN. Only the computing power information of the server with the optimal computing power resource needs to be indicated. For example, under this region, the computing power information of the server with the optimal computing power resource corresponding to FQDN = www.abc.com is that at most 1 million flops operations can be completed every second.

With the foregoing information, the network-side of the 5G core network (5G Core Network, 5GC) can comprehensively evaluate the computing power resources corresponding to each FQDN in each region. Combining the information with the delay information of various interfaces reported by the UPF or collected by the NWDAF, for example, N3 and N6 interface delays, the network side can select the server with the optimal end-to-end delay or the optimal computing power. For example, when DN = 1, for FQDN = www.abc.com, there is a server with a computing power resource of completing one million flops operations every second; while when DN = 2, for FQDN = www.abc.com, there is a server with a computing power resource of completing 500,000 flops operations every second. In this way, for the network side, although DN = 1 may indicate a closest distance to the UE, the end-to-end delay may not be optimal due to the relatively poor computing power of the server under this region. Therefore, at this point, the DNS handling rule generated by the network side must expect to forward the DNS query of the terminal to the DNS server with DN = 1 for resolution and the obtained EAS IP address must be able to meet the condition of either having the optimal computing power or having the shortest delay (for example, shortest N3 or N6 delay when considered comprehensively).

Optionally, in an embodiment, before the generating, by the first communication device, the DNS handling rule, the method further includes: transmitting, by the first communication device, second information to the third communication device, where the second information is used to obtain third information, and the third information includes at least one of the following: N6 delay information of each PSA, PSA and RAN N3 delay information, N9 delay information, and UPF processing delay information; and receiving, by the first communication device, the third information from the third communication device; where the third information is used by the first communication device to generate the DNS handling rule. For example, the first communication device SMF obtains the third information from the NWDAF through a subscription model (Nnwdaf_AnalyticsSubscription_Subscribe) or a request model (Nnwdaf_AnalyticsInfo_Request). The second information included in Nnwdaf_AnalyticsSubscription_Subscribe or Nnwdaf_AnalyticsInfo _Request includes UPF Identification (UPF Identification, UPF ID), UPF IP address, UE ID, UE IP address, and Analytics ID = N3/N6/N9 delay. Then, the NWDAF outputs N3, N6, or N9 delay through the notification model (Nnwdaf_AnalyticsSubscription_Notify) or the response model (Nnwdaf_AnalyticsInfo_Response). Thus, the SMF obtains the corresponding delays of various interfaces from the NWDAF.

In addition, the third information may alternatively be obtained by the SMF from the UPF. For example, the fifth communication device may be a UPF and the device can provide the foregoing third information. The UPF can provide service-oriented signaling, such as the event exposure subscription service (Nupf_EventExposure_Subscribe), and the signaling can be used to subscribe to information on delays of interfaces such as N3, N6, and N9. For example, the first communication device may be an SMF, and it has subscribed to the delay information of one UPF. When subscribing, the SMF transmits the parameter: SUPI (UE ID), Event ID (that is, N6 delay), DNN, N6 interface ID, or the like. After the UPF receives the subscription request, it transmits the delay information subscribed by the SMF to the SMF through the event exposure notification service (Nupf_EventExposure_Notify). Nupf_EventExposure_Notify includes: Event ID, notification correlation information (Notification Correlation Information), UE ID(s) (subscription permanent identifier(s) and if available generic public subscription identifier(s) (Subscription Permanent Identifier(s) and if available Generic Public Subscription Identifier(s), SUPI(s) and if available GPSI(s))), PDU Session ID(s), time stamp (time stamp), and N3, N6, or N9 interface delay.

Optionally, in an embodiment, the method further includes: in a case that the terminal moves or the third information is updated, updating, by the first communication device, the DNS handling rule; where the third information includes at least one of the following: N6 delay information of each PSA, PSA and RAN N3 delay information, N9 delay information, and UPF processing delay information.

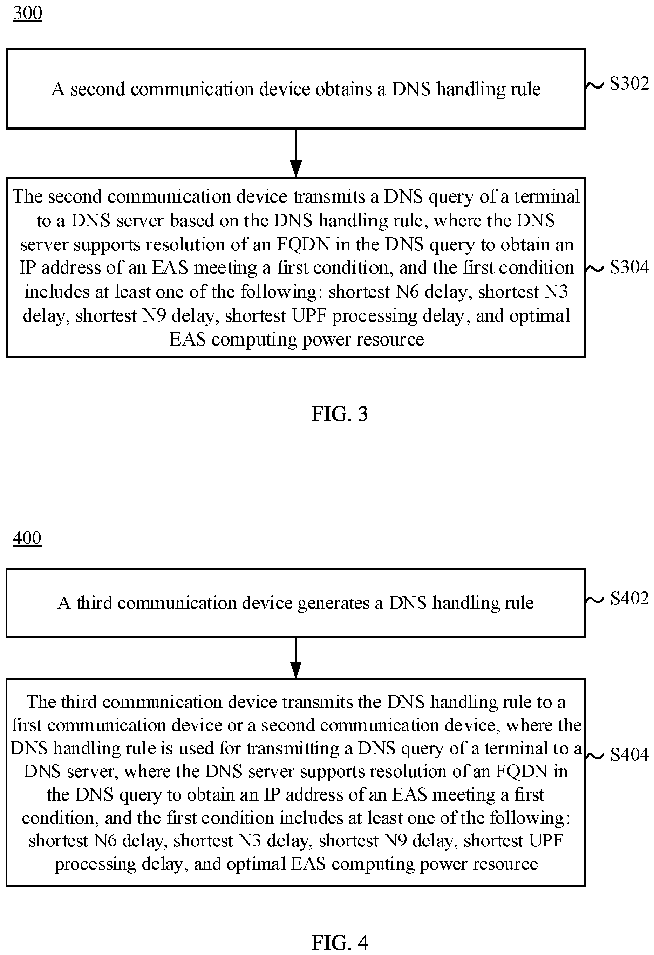

The foregoing describes in detail the server selection method according to this embodiment of this application with reference to FIG. 2. The following describes in detail a server selection method according to another embodiment of this application with reference to FIG. 3. It can be understood that the description shown in FIG. 3 is partially the same or corresponds to the description in FIG. 2. To avoid repetition, related descriptions are appropriately omitted.

FIG. 3 is a schematic flowchart of implementing the server selection method according to this embodiment of this application, and the method is applicable to a second communication device. As shown in FIG. 3, the method 300 includes the following steps.

S302: A second communication device obtains a DNS handling rule.

In this embodiment, the second communication device may be an EASDF.

In this step, the second communication device may generate a DNS handling rule (DNS handling rules); alternatively, the second communication device requests the first communication device or the third communication device to provide a DNS handling rule for the DNS query. In this step, the second communication device may receive the DNS handling rule transmitted by the first communication device or the third communication device. The first communication device may be an SMF, and the third communication device may be an NWDAF.

S304: The second communication device transmits a DNS query of a terminal to a DNS server based on the DNS handling rule, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

It should be noted that a part of the execution process of the embodiment shown in FIG. 3 is the same as or corresponds to a part of the execution process of the embodiment shown in FIG. 2. Therefore, some details in the embodiment shown in FIG. 3 can be described with reference to the embodiment shown in FIG. 2.

In the server selection method provided in this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the obtaining, by a second communication device, a DNS handling rule includes: requesting, by the second communication device, a first communication device or a third communication device to provide the DNS handling rule for the DNS query; or, generating, by the second communication device, the DNS handling rule based on first information, where the first information includes at least one of the following: EAS computing power information, N6 delay information of each PSA, PSA and RAN N3 delay information, N9 delay information, and UPF processing delay information, where the EAS computing power information includes computing power resource information corresponding to an FQDN under a target region.

Optionally, in an embodiment, the requesting, by the second communication device, a first communication device to provide the DNS handling rule for the DNS query includes: transmitting, by the second communication device, at least one of the following to the first communication device: (1) an IP address of the terminal; (2) location information of the terminal; (3) the DNS query transmitted by the terminal or the FQDN in the DNS query; and (4) EAS computing power information, where the EAS computing power information includes the computing power resource information corresponding to the FQDN under the target region.

Optionally, in an embodiment, the requesting, by the second communication device, a third communication device to provide the DNS handling rule for the DNS query includes: transmitting, by the second communication device, at least one of the following to the third communication device: (1) an IP address of the terminal; (2) location information of the terminal; (3) the DNS query transmitted by the terminal or the FQDN in the DNS query; and (4) EAS computing power information, where the EAS computing power information includes the computing power resource information corresponding to the FQDN under the target region.

FIG. 4 is a schematic flowchart of implementing a server selection method according to an embodiment of this application, and the method is applicable to a third communication device. As shown in FIG. 4, the method 400 includes the following steps.

S402: A third communication device generates a DNS handling rule.

In this embodiment, the third communication device may be an NWDAF.

S404: The third communication device transmits a DNS handling rule to a first communication device or a second communication device, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

It should be noted that a part of the execution process of the embodiment shown in FIG. 4 is the same as or corresponds to a part of the execution process of the embodiment shown in FIG. 2. Therefore, some details in the embodiment shown in FIG. 4 can be described with reference to the embodiment shown in FIG. 2.

In this embodiment, the first communication device may be an SMF and the second communication device may be an EASDF.

In the server selection method provided in this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the DNS handling rule includes at least one of the following (1) and (2):
(1) a first IP address, where the first IP address includes an IP address of a region in which the EAS meeting the first condition is located, and is used to be added to the DNS query so as to be transmitted to a first DNS server, where the first DNS server includes a central DNS server, and
(2) a second IP address, where the second IP address includes an IP address of a second DNS server, where the second DNS server supports resolution of the IP address of the EAS meeting the first condition; or the second DNS server is located at a same location as the terminal, where the second DNS server includes a local DNS server.

Optionally, in an embodiment, the first IP address includes at least one of the following: (1) an IP address or IP address segment of a DN in which the EAS meeting the first condition is located; (2) a DNAI of the DN in which the EAS meeting the first condition is located; and (3) an IP address or address segment of a PSA corresponding to a first DNAI, where the first DNAI includes the DNAI of the DN in which the EAS meeting the first condition is located.

Optionally, in an embodiment, the second DNS server being located at a same location as the terminal includes: the second DNS server and the terminal being under a same DNAI.

Optionally, in an embodiment, the generating, by a third communication device, a DNS handling rule includes: generating, by the third communication device, the DNS handling rule based on first information, where the first information includes at least one of the following: EAS information, N6 delay information of each PSA, PSA and RAN N3 delay information, N9 delay information, and UPF processing delay, where the EAS computing power information includes computing power resource information corresponding to an FQDN under a target region.

Optionally, in an embodiment, the method further includes: obtaining, by the third communication device, the first information.

For example, the first or second communication device can obtain the DNS handling rule from the NWDAF through Nnwdaf_AnalyticsSubscription_Subscribe or Nnwdaf_AnalyticsInfo_Request. The inputs to the foregoing signaling include: Analytics ID = DNS handling rules, UE IP address, FQDN in the DNS query of the terminal, EAS deployment information (EAS deployment information), and the like, which are also input to the NWDAF. The NWDAF is expected to provide DNS handling rules for the UE and the FQDN. The NWDAF outputs DNS handling rules through Nnwdaf_AnalyticsSubscription_Notify or Nnwdaf_AnalyticsInfo_Response. Thus, the SMF or EASDF obtains the corresponding delays of various interfaces from the NWDAF.

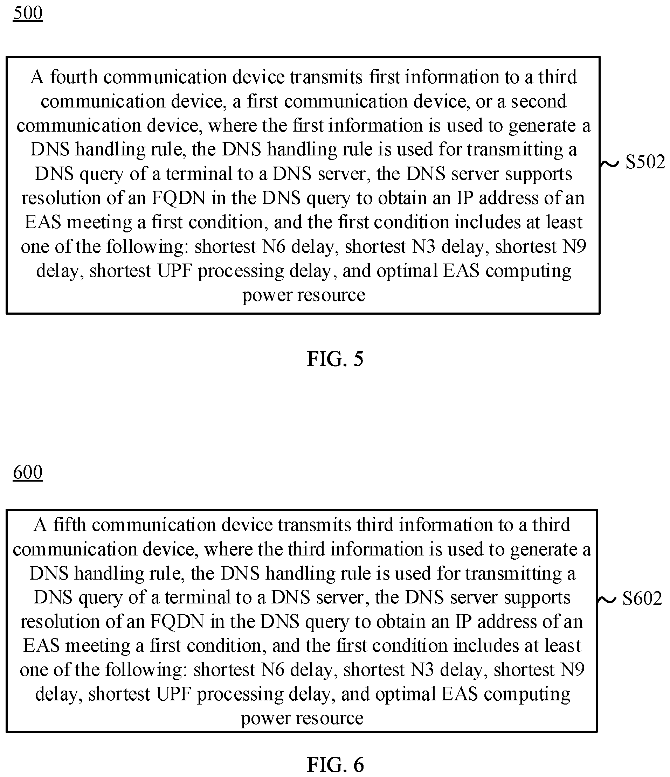

FIG. 5 is a schematic flowchart of implementing a server selection method according to an embodiment of this application, and the method is applicable to a fourth communication device. As shown in FIG. 5, the method 500 includes the following steps.

S502: A fourth communication device transmits first information to a third communication device, a first communication device, or a second communication device, where the first information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment, the fourth communication device may be an AF.

In the server selection method provided in this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the first information includes at least one of the following: EAS computing power information, N6 delay information of each PSA, PSA and RAN N3 delay information, N9 delay information, UPF processing delay information, local DNS server IP (local DNS server IP) address per DNAI, and EAS computing power information corresponding to the FQDN per DNAI, where the EAS computing power information includes computing power resource information corresponding to an FQDN under a target region. The first information, in an embodiment, is also called EAS deployment information.

FIG. 6 is a schematic flowchart of implementing a server selection method according to an embodiment of this application, and the method is applicable to a fifth communication device. As shown in FIG. 6, the method 600 includes the following steps.

S602: A fifth communication device transmits third information to a third communication device, where the third information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment, the fifth communication device may be a UPF.

In the server selection method provided in this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the third information includes at least one of the following: N6 delay information of each PSA, PSA and RAN N3 delay information, N9 delay information, and UPF processing delay information.

Optionally, in an embodiment, before the transmitting, by a fifth communication device, third information to a third communication device, the third communication device has subscribed to a service of the fifth communication device, where the service is used to obtain the third information.

For example, the fifth communication device may be a UPF and the device can provide the foregoing third information. The UPF can provide service-oriented signaling, such as Nupf_EventExposure_EventExposure_Subscribe, and the signaling can be used to subscribe to information on delays of interfaces such as N3, N6, and N9. For example, the first communication device may be an SMF, and it has subscribed to the delay information of one UPF. When subscribing, the SMF transmits the parameter:. After the UPF receives the subscription request, it transmits the delay information subscribed by the SMF to the SMF through Nupf_EventExposure_Notify. Nupf_EventExposure_Notify includes: Event ID, Notification Correlation Information, UE ID(s) (SUPI(s) and if available GPSI(s)), PDU session ID(s), time stamp, and N3 or N6 or N9 interface delay.

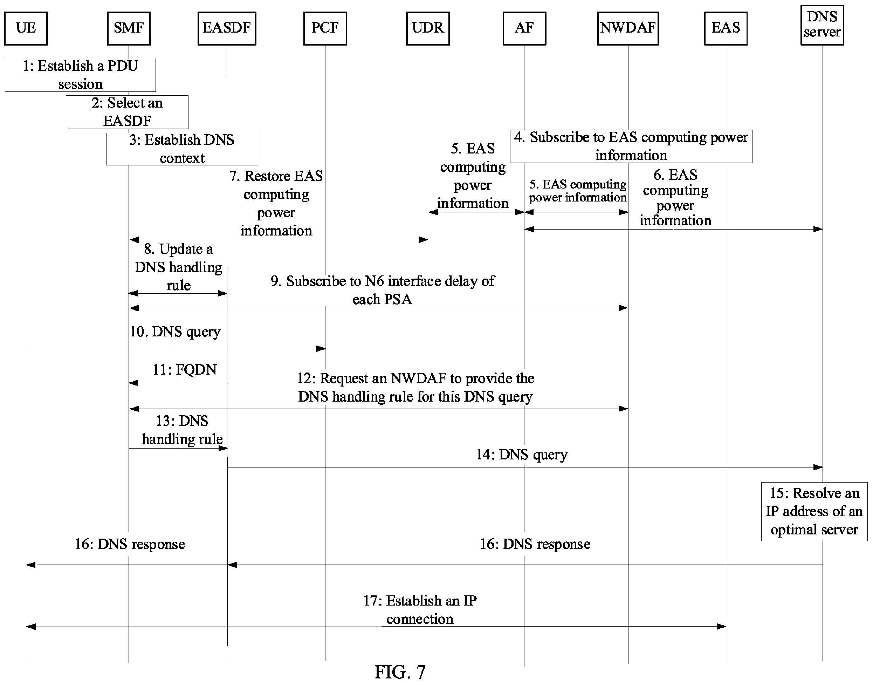

In order to describe in detail the server selection method provided in the embodiments of this application, the following provides descriptions with reference to several specific embodiments. As shown in FIG. 7, the embodiment includes the following steps.

Step 1: A terminal establishes a PDU session.

Step 2: An SMF selects an EASDF for UE.

Step 3: The SMF establishes DNS context for the UE in the EASDF.

Step 4: An AF subscribes to EAS computing power information. The AF subscribes to the computing power information of each EAS.

Step 5: The AF provides the EAS computing power information to a 5G core network (5GC). The EAS computing power information is included in EAS deployment information.

In one example, the AF provides the EAS computing power information and an NEF then transmits this information to a Unified Data Repository (Unified Data Repository, UDR). For example, the AF provides the EAS deployment information to the NEF through Nnef_EASDeployment_Create/Update/Delete, and the NEF then transmits this information to the UDR through Nudr_DM_Create/Update/Delete.

In one example, the AF provides the EAS computing power information, and the NEF then possibly transmits this information to an NWDAF. For example, the AF provides the EAS deployment information to the NEF through Nnef_EASDeployment_Create/Update/Delete; then the NEF provides the EAS deployment information to the NWDAF; additionally, the NWDAF can subscribe to the EAS deployment information of the AF, for example, the NWDAF subscribes to Nnef_EventExposure_Subscribe, and then the NEF subscribes to Naf_EventExposure_Subscribe of the AF to obtain the EAS deployment information (including the EAS computing power information). The AF transmits the EAS deployment information to the NEF via Naf_EventExposure_Notify, and then the NEF transmits the EAS deployment information to the NWDAF via Nnef_EventExposure_Notify.

The foregoing EAS deployment information includes the EAS computing power information, including at least one of the following (1) to (3):
(1) A local DNS server IP address (Local DNS server IP address) which can be provided based on each DNAI
(2) An FQDN supported by each local DNS server and the computing power information corresponding to the FQDN.
   In one case, the computing powers of all servers of the FQDN supported by this DNS server are informed to the 5GC, for example, local DNS server 1 can resolve FQDN = Tencent.com, and the computing powers here are respectively: 10 CPUs, 5 CPUs, and the like. In another case, only the maximum computing power is informed to the 5GC, for example, local DNS server 1 can resolve FQDN = Tencent.com, and the maximum computing power can be provided is 10 CPUs.
(3) An application ID (Application ID, APP ID) of each DNAI.

Step 6: The DNS server can subscribe to the EAS computing power information. In this way, when resolving the FQDN, the DNS server can use the IP address of the EAS with the optimal computing power as the resolution result of the FQDN. The DNS server can subscribe to the EAS computing power information in the form of AF.

Step 7: The SMF restores the EAS computing power information from the UDR or the NEF. The EAS computing power information is included in the EAS deployment information. The information is used by the SMF to generate the DNS handling rule for the EASDF. At this point, the handling rule, being generated based on the new EAS computing power information, takes into account factors such as the EAS computing power and an N6 delay. For example, the SMF obtains the EAS deployment information through Nnef_EASDeployment_Subscribe.

Step 8: When the terminal moves, the N6 delay changes, or the EAS computing power information changes, the SMF can update the DNS handling rule, where the N6 delay information may come from the NWDAF.

Step 9: The SMF can subscribe to the N6 interface delay, an N3 delay, or an N9 delay of each PSA in the NWDAF.

PSA IDs, IP addresses, and the like, which are controlled by the SMF, are provided by the SMF to the NWDAF, and the NWDAF can collect the N6 delays of these PSAs.

For example, the first communication device SMF obtains third information from the NWDAF through Nnwdaf_AnalyticsSubscription_Subscribe or Nnwdaf_AnalyticsInfo_Request. Second information included in Nnwdaf_AnalyticsSubscription_Subscribe or Nnwdaf_AnalyticsInfo_Request includes UPF ID, UPF IP address, UE ID, UE IP address, and Analytics ID = N3/N6/N9 delay. Then, the NWDAF outputs N3/N6/N9 delay through Nnwdaf_AnalyticsSubscription_Notify orNnwdaf_AnalyticsInfo_Response. Thus, the SMF obtains the corresponding delays of various interfaces from the NWDAF.

Step 10: The UE sends a DNS query, where the query includes an FQDN, that is, a domain name to be resolved.

Step 11: After receiving the DNS query from the UE, the EASDF transmits the FQDN in the DNS query to the SMF in a method of transmitting the following signaling Neasdf_DNSContext_Notify Request.

At this point, the SMF has two schemes for providing the DNS handling rule for the EASDF.

Scheme 1: step 12: the SMF requests the NWDAF to provide the DNS handling rule for this DNS query, for example, through the following signaling: Nnwdaf_AnalyticsSubscription_Subscribe, or Nnwdaf_AnalyticsInfo_Request. Parameter input: Analytics ID = DNS handling rules. In addition, the UE IP address, FQDN, EAS computing power information (possibly have been provided to the NWDAF by the AF before), and the like are also input to the NWDAF. It is expected that the NWDAF can provide the DNS handling rule for the UE and the FQDN.

Scheme 2: The SMF provides the DNS handling rule for this DNS query based on the EAS computing power information and the N6 delay provided by the NWDAF.

Step 13: The SMF issues the DNS handling rule to the EASDF, for example, through the following signaling: Neasdf DNSContext_Update Request.

Case A: The DNS handling rule includes one IP address used to fill in an ECS option part of the DNS query. This IP address should correspond to a comprehensive consideration: optimal computing power + shortest N6/N3/N9 delay. For example, the IP address corresponds to the PSA with the shortest N6 delay, the UPF with the shortest N3 delay, or the IP address of the UPF with the shortest N9 delay.

Case B: A local DNS server IP address is put in the DNS handling rule. The local DNS server IP address corresponds to the DNS server that can resolve an optimal server.

Step 14: The DNS query is transmitted to the DNS server.

Step 15: If the DNS server has subscribed to or obtained the previous optimal computing power information in this region, as described in Step 5, then the DNS server can resolve an IP address of the optimal server for the FQDN of this UE.

Step 16: A DNS response is fed back. If a new user plane needs to be inserted during this process, the inserted PSA is the PSA corresponding to the optimal server.

Step 17: The UE establishes an IP connection with the EAS.

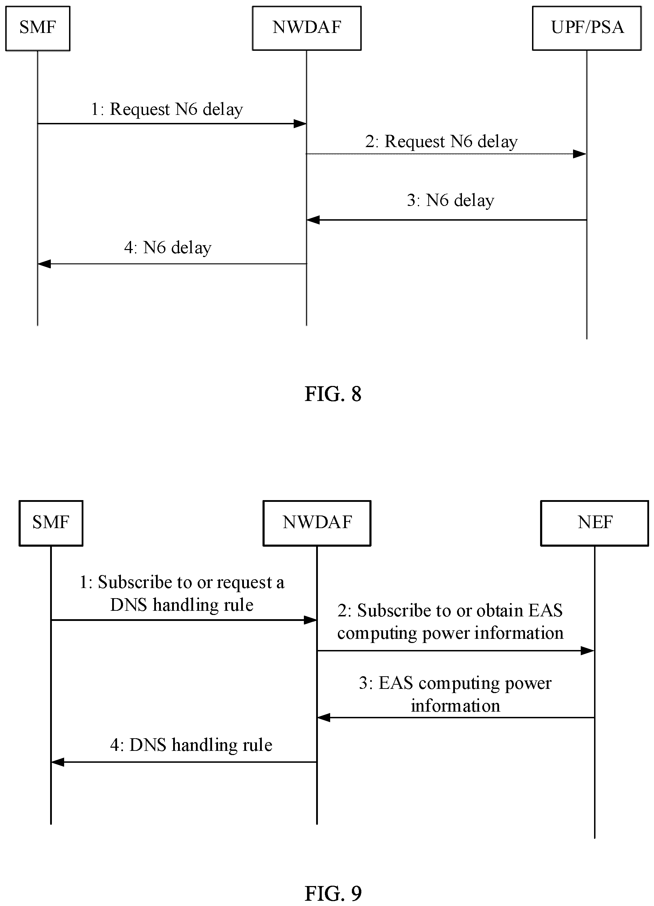

As shown in FIG. 8, the embodiment primarily introduces NWDAF providing N6 delay, N3 delay, N9 delay, and the like. For part of the description, refer to the embodiment shown in FIG. 7. This embodiment includes the following steps.

Step 1: An SMF can subscribe to N6 interface delay, N3 delay, or N9 delay of each PSA in an NWDAF.

For example, the SMF obtains third information from the NWDAF through Nnwdaf_AnalyticsSubscription_Subscribe or Nnwdaf_AnalyticsInf_Request. Second information included in Nnwdaf_AnalyticsSubscription_Subscribe or Nnwdaf_AnalyticsInfo_Request includes UPF ID, UPF IP address, UE ID, UE IP address, and Analytics ID = N3/N6/N9 delay. Then, the NWDAF outputs N3/N6/N9 delay through Nnwdaf_AnalyticsSubscription_Notify or Nnwdaf_AnalyticsInfo_Response. Thus, the SMF obtains the corresponding delays of various interfaces from the NWDAF.

Step 2: The NWDAF subscribes to the service of a UPF, for example, through the following signaling: Nupf EventExposure_EventExposure_Subscribe. Parameters include: SUPI (UE ID), Event ID (that is, N6 delay), DNN, N6 interface ID, or the like, to obtain the N3/N9/N6 interface delay for each PSA.

Step 3: The UPF notifies the NWDAF of the delay of one N6 interface through Nupf_EventExposure_Notify.

Step 4: The NWDAF informs the SMF of the subscribed N6 delay through Nnwdaf_AnalyticsSubscription_Notify or Nnwdaf_AnalyticsInfo_Response.

As shown in FIG. 9, this embodiment primarily introduces NWDAF providing a DNS handling rule. For part of the description, refer to step 12 of the embodiment shown in FIG. 7. This embodiment includes the following steps.

Step 1: An SMF requests an NWDAF to provide a DNS handling rule for a DNS query.

For example, through the following signaling: Nnwdaf_AnalyticsSubscription_Subscribe or Nnwdaf_AnalyticsInfo_Request. Parameter input: Analytics ID = DNS handling rules. In addition, the UE IP address, FQDN, EAS computing power information (possibly have been provided to the NWDAF by the AF before), and the like are also input to the NWDAF. It is expected that the NWDAF can provide the DNS handling rule for the UE and the FQDN.

Step 2: If in step 1, the SMF have not provided the EAS computing power information, then an AF may have provided the EAS computing power information in advance. Then the NWDAF subscribes to Nnef_EASDeployment_Subscribe, subscribing to the EAS computing power information.

Step 3: The NWDAF is informed of the EAS computing power information through the following signaling Nnef_EASDeployment_Notify.

Step 4: The NWDAF informs the SMF of the DNS handling rule generated for the DNS query of a specific UE through Nnwdaf_AnalyticsSubscription_Notify or Nnwdaf_AnalyticsInfo_Response.

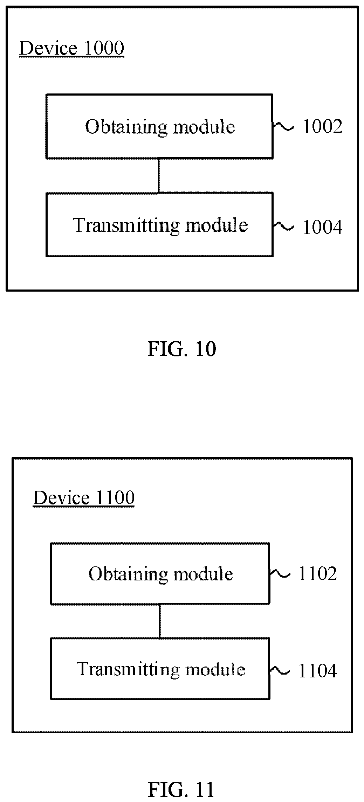

FIG. 10 is a schematic structural diagram of a first communication device according to an embodiment of this application. As shown in FIG. 10, the first communication device 1000 includes the following modules:
an obtaining module 1002, configured to obtain a DNS handling rule, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource; and
a transmitting module 1004, configured to transmit the DNS handling rule to a second communication device.

In this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the DNS handling rule includes at least one of the following (1) and (2):
(1) a first IP address, where the first IP address includes an IP address of a region in which the EAS meeting the first condition is located, and is used to be added to the DNS query so as to be transmitted to a first DNS server, where the first DNS server includes a central DNS server, and
(2) a second IP address, where the second IP address includes an IP address of a second DNS server, where the second DNS server supports resolution of the IP address of the EAS meeting the first condition; or the second DNS server is located at a same location as the terminal, where the second DNS server includes a local DNS server, and

Optionally, in an embodiment, the first IP address includes at least one of the following (1) to (3):
(1) an IP address or IP address segment of a data network DN in which the EAS meeting the first condition is located;
(2) a data network access identity DNAI of the DN in which the EAS meeting the first condition is located; and
(3) an IP address or address segment of a PSA corresponding to a first DNAI, where the first DNAI includes the DNAI of the DN in which the EAS meeting the first condition is located.

Optionally, in an embodiment, the second DNS server being located at a same location as the terminal includes: the second DNS server and the terminal being under a same DNAI.

Optionally, in an embodiment, the obtaining module 1002 is configured to request a third communication device to provide the DNS handling rule for the DNS query. Alternatively, the DNS handling rule is generated based on first information, where the first information includes at least one of EAS computing power information, N6 delay information of each PSA, N3 delay information of PSA and RAN, N9 delay information and UPF processing delay information, where the EAS computing power information includes computing power resource information corresponding to an FQDN under a target region.

Optionally, in an embodiment, the DNS query is a DNS query transmitted by the terminal.

Optionally, in an embodiment, the obtaining module 1002 is configured to transmit at least one of the following 1) to 4) to the third communication device: (1) an IP address of the terminal; (2) location information of the terminal; (3) the DNS query transmitted by the terminal or the FQDN in the DNS query; and (4) EAS computing power information, where the EAS computing power information includes the computing power resource information corresponding to the FQDN under the target region.

Optionally, in an embodiment, the EAS computing power information includes at least one of the following: (1) computing power resource information of one or more EASs corresponding to a first FQDN under the target region; and (2) an EAS with a largest computing power resource corresponding to the first FQDN under the target region; where the first FQDN is an FQDN supported and resolvable by the first DNS server or the second DNS server.

Optionally, in an embodiment, the transmitting module 1004 is further configured to transmit second information to a third communication device, where the second information is used to obtain third information, and the third information includes at least one of the following: N6 delay information of each PSA, PSA and RAN N3 delay information, N9 delay information, and UPF processing delay information. The first communication device receives the third information from the third communication device, where the third information is used by the first communication device to generate the DNS handling rule.

Optionally, in an embodiment, the first communication device further includes an updating module, where the updating module is configured to update the DNS handling rule in a case that the terminal moves or the third information is updated, where the third information includes at least one of the following: N6 delay information of each PSA, PSA and RAN N3 delay information, N9 delay information, and UPF processing delay information.

For the device 1000 according to this embodiment of this application, reference may be made to the processes of the method 200 in the corresponding embodiment of this application, and the units/modules of the device 1000 and other operations and/or functions described above are respectively intended to implement the corresponding processes in the method 200, with the same or equivalent technical effects achieved. For brevity, details are not described herein again.

FIG. 11 is a schematic structural diagram of a second communication device according to an embodiment of this application. As shown in FIG. 11, the second communication device 1100 includes the following modules:
an obtaining module 1102, configured to obtain a DNS handling rule; and
a transmitting module 1104, configured to transmit a DNS query of a terminal to a DNS server based on the DNS handling rule, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the obtaining module 1102 is configured to request a first communication device or a third communication device to provide a DNS handling rule for the DNS query. Alternatively, the DNS handling rule is generated based on first information, where the first information includes at least one of EAS computing power information, N6 delay information of each PSA, N3 delay information of PSA and RAN, N9 delay information and UPF processing delay information, where the EAS computing power information includes computing power resource information corresponding to an FQDN under a target region.

Optionally, in an embodiment, the obtaining module 1102 is configured to transmit at least one of the following to the first communication device: (1) an IP address of the terminal; (2) location information of the terminal; (3) the DNS query transmitted by the terminal or the FQDN in the DNS query; and (4) EAS computing power information, where the EAS computing power information includes the computing power resource information corresponding to an FQDN under a target region.

Optionally, in an embodiment, the obtaining module 1102 is configured to transmit at least one of the following to the third communication device: (1) an IP address of the terminal; (2) location information of the terminal; (3) the DNS query transmitted by the terminal or the FQDN in the DNS query; and (4) EAS computing power information, where the EAS computing power information includes the computing power resource information corresponding to an FQDN under a target region.

For the device 1100 according to this embodiment of this application, reference may be made to the processes of the method 300 in the corresponding embodiment of this application, and the units/modules of the device 1100 and other operations and/or functions described above are respectively intended to implement the corresponding processes in the method 300, with the same or equivalent technical effects achieved. For brevity, details are not described herein again.

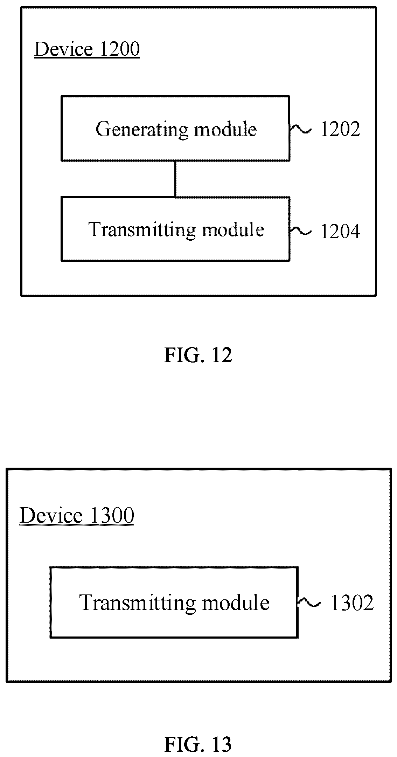

FIG. 12 is a schematic structural diagram of a third communication device according to an embodiment of this application. As shown in FIG. 12, the third communication device 1200 includes the following modules:
a generating module 1202, configured to generate a DNS handling rule; and
a transmitting module 1204, configured to transmit the DNS handling rule to a first communication device or a second communication device, where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the DNS handling rule includes at least one of the following (1) and (2):
(1) a first IP address, where the first IP address includes an IP address of a region in which the EAS meeting the first condition is located, and is used to be added to the DNS query so as to be transmitted to a first DNS server, where the first DNS server includes a central DNS server, and
(2) a second IP address, where the second IP address includes an IP address of a second DNS server, where the second DNS server supports resolution of the IP address of the EAS meeting the first condition; or the second DNS server is located at a same location as the terminal, where the second DNS server includes a local DNS server, and

Optionally, in an embodiment, the first IP address includes at least one of the following: (1) an IP address or IP address segment of a data network DN in which the EAS meeting the first condition is located; (2) a data network access identity DNAI of the DN in which the EAS meeting the first condition is located; and (3) an IP address or address segment of a PSA corresponding to a first DNAI, where the first DNAI includes the DNAI of the DN in which the EAS meeting the first condition is located.

Optionally, in an embodiment, the second DNS server being located at a same location as the terminal includes: the second DNS server and the terminal being under a same DNAI.

Optionally, in an embodiment, the generating module 1202 is configured to generate the DNS handling rule based on first information, where the first information includes at least one of the following: EAS information, N6 delay information of each PSA, PSA and RAN N3 delay information, N9 delay information, and UPF processing delay, where the EAS computing power information includes computing power resource information corresponding to an FQDN under a target region.

Optionally, in an embodiment, the third communication device further includes an obtaining module, configured to obtain the first information.

For the device 1200 according to this embodiment of this application, reference may be made to the processes of the method 400 in the corresponding embodiment of this application, and the units/modules of the device 1200 and other operations and/or functions described above are respectively intended to implement the corresponding processes in the method 400, with the same or equivalent technical effects achieved. For brevity, details are not described herein again.

FIG. 13 is a schematic structural diagram of a fourth communication device according to an embodiment of this application. As shown in FIG. 13, the fourth communication device 1300 includes the following modules:
a transmitting module 1302, configured to transmit first information to a third communication device, a first communication device, or a second communication device, where the first information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the first information includes at least one of the following: EAS computing power information, N6 delay information of each PSA, PSA and RAN N3 delay information, N9 delay information, and UPF processing delay information, where the EAS computing power information includes computing power resource information corresponding to an FQDN under a target region.

For the device 1300 according to this embodiment of this application, reference may be made to the processes of the method 500 in the corresponding embodiment of this application, and the units/modules of the device 1300 and other operations and/or functions described above are respectively intended to implement the corresponding processes in the method 500, with the same or equivalent technical effects achieved. For brevity, details are not described herein again.

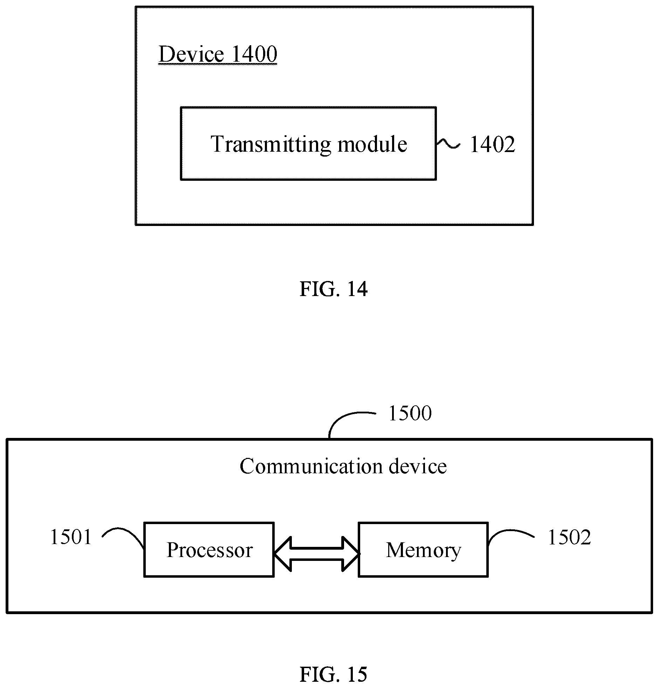

FIG. 14 is a schematic structural diagram of a fifth communication device according to an embodiment of this application. As shown in FIG. 14, the fifth communication device 1400 includes the following modules:
a transmitting module 1402, configured to transmit third information to a third communication device, where the third information is used to generate a DNS handling rule; where the DNS handling rule is used for transmitting a DNS query of a terminal to a DNS server, where the DNS server supports resolution of an FQDN in the DNS query to obtain an IP address of an EAS meeting a first condition, and the first condition includes at least one of the following: shortest N6 delay, shortest N3 delay, shortest N9 delay, shortest UPF processing delay, and optimal EAS computing power resource.

In this embodiment of this application, the DNS handling rule is improved. According to the DNS handling rule, the DNS query of the terminal can be transmitted to the DNS server, where the DNS server supports resolution of the IP address of the EAS meeting the first condition. The first condition includes at least one of the following: shortest N6 delay, shortest N3 delay, shortest N9 delay, shortest UPF processing delay, and optimal EAS computing power resource. This embodiment of this application is conducive to resolving an EAS with better performance, improving the communication performance of the terminal, and improving the user experience.

Optionally, in an embodiment, the third information includes at least one of the following: N6 delay information of each PSA, PSA and RAN N3 delay information, N9 delay information, and UPF processing delay information.

Optionally, in an embodiment, the third communication device has subscribed to a service of the fifth communication device, where the service is used to obtain the third information.

For the device 1400 according to this embodiment of this application, reference may be made to the processes of the method 600 in the corresponding embodiment of this application, and the units/modules of the device 1400 and other operations and/or functions described above are respectively intended to implement the corresponding processes in the method 600, with the same or equivalent technical effects achieved. For brevity, details are not described herein again.

Optionally, as shown in FIG. 15, an embodiment of this application further provides a communication device 1500 including a processor 1501 and a memory 1502. The memory 1502 stores a program or instructions capable of running on the processor 1501. For example, if the communication device 1500 is a network-side device, when the program or the instructions are executed by the processor 1501, the steps of the foregoing embodiment of the server selection method are implemented, with the same technical effects achieved. To avoid repetition, details are not described herein again.

An embodiment of this application further provides a network-side device including a processor and a communication interface. The processor and the communication interface are configured to execute the steps of the embodiments shown in FIG. 2 to FIG. 6. This network-side device embodiment corresponds to the foregoing network-side device method embodiment. All processes and implementations in the foregoing method embodiment can be applicable to this network-side device embodiment, with the same technical effect achieved.

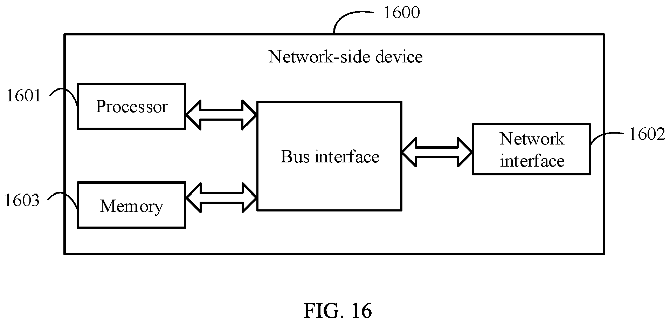

Specifically, an embodiment of this application further provides a network-side device. As shown in FIG. 16, the network-side device 1600 includes a processor 1601, a network interface 1602, and memory 1603. The network interface 1602 is, for example, a common public radio interface (Common Public Radio Interface, CPRI).

Specifically, the network-side device 1600 in this embodiment of the present invention further includes: instructions or a program stored in the memory 1603 and capable of running on the processor 1601. The processor 1601 invokes the instructions or program in the memory 1603 to execute the method executed by the modules shown in FIG. 10 to FIG. 14, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing server selection method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing server selection method embodiment, with the same technical effect achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program or program product, where the computer program or program product is stored in a storage medium, and the computer program product is executed by at least one processor to implement the processes of the foregoing server selection method embodiments, with the same technical effects achieved. To avoid repetition, details are not described herein again.

An embodiment of this application further provides a server selection system including a terminal and a network-side device. The network-side device may be configured to execute the steps of the foregoing server selection method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A server selection method, comprising:
obtaining, by a first communication device, a domain name system DNS handling rule, wherein the DNS handling rule is used for transmitting a DNS query of a terminal to a DNS server, wherein the DNS server supports resolution of a fully qualified domain name FQDN in the DNS query to obtain an IP address of an edge application server EAS meeting a first condition, and the first condition comprises at least one of the following: shortest N6 delay, shortest N3 delay, shortest N9 delay, shortest user plane function UPF processing delay, and optimal EAS computing power resource; and
transmitting, by the first communication device, the DNS handling rule to a second communication device.

2. The method according to claim 1, wherein the DNS handling rule comprises at least one of the following:
a first IP address, wherein the first IP address comprises an IP address of a region in which the EAS meeting the first condition is located, and is used to be added to the DNS query so as to be transmitted to a first DNS server, wherein the first DNS server comprises a central DNS server; and
a second IP address, wherein the second IP address comprises an IP address of a second DNS server, wherein the second DNS server supports resolution of the IP address of the EAS meeting the first condition; or the second DNS server is located at a same location as the terminal, wherein the second DNS server comprises a local DNS server.

3. The method according to claim 2, wherein the first IP address comprises at least one of the following:
an IP address or IP address segment of a data network DN in which the EAS meeting the first condition is located;
a data network access identity DNAI of the DN in which the EAS meeting the first condition is located; and
an IP address or address segment of a PSA corresponding to a first DNAI, wherein the first DNAI comprises the DNAI of the DN in which the EAS meeting the first condition is located.

4. The method according to claim 2, wherein the second DNS server being located at a same location as the terminal comprises:
the second DNS server and the terminal being under a same DNAI.

5. The method according to claim 2, wherein the obtaining, by a first communication device, a DNS handling rule comprises:
requesting, by the first communication device, a third communication device to provide the DNS handling rule for the DNS query; or
generating, by the first communication device, the DNS handling rule based on first information, wherein the first information comprises at least one of the following: EAS computing power information, N6 delay information of each PSA, PSA and RAN N3 delay information, N9 delay information, and UPF processing delay information, wherein the EAS computing power information comprises computing power resource information corresponding to an FQDN under a target region.

6. The method according to claim 5, wherein the DNS query is a DNS query transmitted by the terminal.

7. The method according to claim 5, wherein the requesting, by the first communication device, a third communication device to provide the DNS handling rule for the DNS query comprises: transmitting, by the first communication device, at least one of the following to the third communication device:
an IP address of the terminal;
location information of the terminal;
the DNS query transmitted by the terminal or the FQDN in the DNS query; and
EAS computing power information, wherein the EAS computing power information comprises the computing power resource information corresponding to the FQDN under the target region.

8. The method according to claim 5 or 7, wherein the EAS computing power information comprises at least one of the following:
computing power resource information of one or more EASs corresponding to a first FQDN under the target region; and
an EAS with a largest computing power resource corresponding to the first FQDN under the target region; wherein
the first FQDN is an FQDN supported and resolvable by the first DNS server or the second DNS server.

9. The method according to claim 5, wherein before the generating, by the first communication device, the DNS handling rule, the method further comprises:
transmitting, by the first communication device, second information to the third communication device, wherein the second information is used to obtain third information, and the third information comprises at least one of the following: N6 delay information of each PSA, PSA and RAN N3 delay information, N9 delay information, and UPF processing delay information; and
receiving, by the first communication device, the third information from the third communication device; wherein
the third information is used by the first communication device to generate the DNS handling rule.

10. The method according to any one of claims 1 to 9, wherein the method further comprises:
in a case that the terminal moves or the third information is updated, updating, by the first communication device, the DNS handling rule, wherein
the third information comprises at least one of the following: N6 delay information of each PSA, PSA and RAN N3 delay information, N9 delay information, and UPF processing delay information.

11. A server selection method, comprising:
obtaining, by a second communication device, a DNS handling rule; and
transmitting, by the second communication device, a DNS query of a terminal to a DNS server based on the DNS handling rule, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

12. The method according to claim 11, wherein the obtaining, by a second communication device, a DNS handling rule comprises:
requesting, by the second communication device, a first communication device or a third communication device to provide the DNS handling rule for the DNS query; or,
generating, by the second communication device, the DNS handling rule based on first information, wherein the first information comprises at least one of the following: EAS computing power information, N6 delay information of each PSA, PSA and RAN N3 delay information, N9 delay information, and UPF processing delay information, wherein the EAS computing power information comprises computing power resource information corresponding to an FQDN under a target region.

13. The method according to claim 12, wherein the requesting, by the second communication device, a first communication device to provide the DNS handling rule for the DNS query comprises: transmitting, by the second communication device, at least one of the following to the first communication device:
an IP address of the terminal;
location information of the terminal;
the DNS query transmitted by the terminal or the FQDN in the DNS query; and
EAS computing power information, wherein the EAS computing power information comprises the computing power resource information corresponding to the FQDN under the target region.

14. The method according to claim 12, wherein the requesting, by the second communication device, a third communication device to provide the DNS handling rule for the DNS query comprises: transmitting, by the second communication device, at least one of the following to the third communication device:
an IP address of the terminal;
location information of the terminal;
the DNS query transmitted by the terminal or the FQDN in the DNS query; and
EAS computing power information, wherein the EAS computing power information comprises the computing power resource information corresponding to the FQDN under the target region.

15. A server selection method, comprising:
generating, by a third communication device, a DNS handling rule;
transmitting, by the third communication device, the DNS handling rule to a first communication device or a second communication device, wherein the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

16. The method according to claim 15, wherein the DNS handling rule comprises at least one of the following:
a first IP address, wherein the first IP address comprises an IP address of a region in which the EAS meeting the first condition is located, and is used to be added to the DNS query so as to be transmitted to a first DNS server, wherein the first DNS server comprises a central DNS server; and
a second IP address, wherein the second IP address comprises an IP address of a second DNS server, wherein the second DNS server supports resolution of the IP address of the EAS meeting the first condition; or the second DNS server is located at a same location as the terminal, wherein the second DNS server comprises a local DNS server.

17. The method according to claim 16, wherein the first IP address comprises at least one of the following:
an IP address or IP address segment of a data network DN in which the EAS meeting the first condition is located;
a data network access identity DNAI of the DN in which the EAS meeting the first condition is located; and
an IP address or address segment of a PSA corresponding to a first DNAI, wherein the first DNAI comprises the DNAI of the DN in which the EAS meeting the first condition is located.

18. The method according to claim 16, wherein the second DNS server being located at a same location as the terminal comprises:
the second DNS server and the terminal being under a same DNAI.

19. The method according to claim 16, wherein the generating, by a third communication device, a DNS handling rule comprises:
generating, by the third communication device, the DNS handling rule based on first information, where the first information comprises at least one of the following: EAS information, N6 delay information of each PSA, PSA and RAN N3 delay information, N9 delay information, and UPF processing delay, where the EAS computing power information comprises computing power resource information corresponding to an FQDN under a target region.

20. The method according to claim 19, wherein the method further comprises:
obtaining, by the third communication device, the first information.

21. A server selection method, comprising:
transmitting, by a fourth communication device, first information to a third communication device, a first communication device, or a second communication device, wherein the first information is used to generate a DNS handling rule; wherein
the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

22. The method according to claim 21, wherein the first information comprises at least one of the following: EAS computing power information, N6 delay information of each PSA, PSA and RAN N3 delay information, N9 delay information, and UPF processing delay information, wherein the EAS computing power information comprises computing power resource information corresponding to an FQDN under a target region.

23. A server selection method, comprising:
transmitting, by a fifth communication device, third information to a third communication device, wherein the third information is used to generate a DNS handling rule; wherein
the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

24. The method according to claim 23, wherein the third information comprises at least one of the following:
N6 delay information of each PSA, PSA and RAN N3 delay information, N9 delay information, and UPF processing delay information.

25. The method according to claim 23, wherein before the transmitting, by a fifth communication device, third information to a third communication device, subscribing, by the third communication device, to a service of the fifth communication device, wherein the service is used to obtain the third information.

26. A first communication device, comprising:
an obtaining module, configured to obtain a DNS handling rule, wherein the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource; and
a transmitting module, configured to transmit the DNS handling rule to a second communication device.

27. A second communication device, comprising:
an obtaining module, configured to obtain a DNS handling rule; and
a transmitting module, configured to transmit a DNS query of a terminal to a DNS server based on the DNS handling rule, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

28. A third communication device, comprising:
a generating module, configured to generate a DNS handling rule; and
a transmitting module, configured to transmit the DNS handling rule to a first communication device or a second communication device, wherein the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

29. A fourth communication device, comprising:
a transmitting module, configured to transmit first information to a third communication device, a first communication device, or a second communication device, wherein the first information is used to generate a DNS handling rule; wherein
the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

30. A fifth communication device, comprising:
a transmitting module, configured to transmit third information to a third communication device, wherein the third information is used to generate a DNS handling rule; wherein
the DNS handling rule is used for transmitting a DNS query of a terminal to a DNS server, wherein the DNS server supports resolution of an FQDN in the DNS query to obtain an IP address of an EAS meeting a first condition, and the first condition comprises at least one of the following: shortest N6 delay, shortest N3 delay, shortest N9 delay, shortest UPF processing delay, and optimal EAS computing power resource.

31. A network-side device, comprising a processor and a memory, wherein the memory stores a program or instructions capable of running on the processor, and when the program or instructions are executed by the processor, the steps of the server selection method according to any one of claims 1 to 25 are implemented.

32. A readable storage medium, wherein the readable storage medium stores a program or instructions, and when the program or the instructions are executed by a processor, the steps of the server selection method according to any one of claims 1 to 25 are implemented.
